# EUROPÄISCHE PATENTSCHRIFT

(11) **EP 1 106 292 B1**
(45) Veröffentlichungstag und Bekanntmachung des Hinweises auf die Patenterteilung: **02.03.2005**
(21) Anmeldenummer: 00122272.8
(22) Anmeldetag: 19.10.2000
(51) Int. Cl.: B23G 7/02

(54) **Gewindefurcher und dessen Anwendung**
Forming tap and its use
Outil de filetage et son utilisation

(30) Priorität: 07.12.1999 DE 19958827
(43) Veröffentlichungstag der Anmeldung: 13.06.2001
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, Dipl.-Ing., 91207 Lauf (DE); Maier, Dietmar, 91207 Lauf (DE); Liebau, Dietmar, 91224 Pommelsbrunn (DE); Fritsch, Rainer, 52074 Aachen (DE)
(74) Vertreter: Böhme, Volker, Dipl.-Ing.

(56) Entgegenhaltungen:
- EP-A- 0 004 089
- DE-A- 3 107 910
- FR-A- 628 184
- GB-A- 1 584 771

## Beschreibung

Die Erfindung betrifft einen Gewindefurcher, der einen Schaftteil und einen Formgebungsteil bildet, bei dem der Formgebungsteil an einem Kern Gewindegänge bildet und in einen Anlaufbereich und einen Führungsbereich gegliedert ist, bei dem im Anlaufbereich die Gewindegänge nahe dem Kern innere schräge Drückflanken bilden und an diese radial nach außen anschließend äußere Drückflächen bilden,
bei dem im Führungsbereich die Gewindegänge im Querschnitt gesehen radial nach außen im wesentlichen spitzwinkelig sind und bei dem der Anlaufbereich in der Wirkung der Gewindegänge von einem Vorderende zu dem Führungsbereich zunimmt.

Der Gewindefurcher dient zur spanlosen Innengewindeherstellung. Der Schaftteil ist in der Regel zylindrisch, dient zur Werkzeugaufnahme in einem Spannfutter und trägt in der Regel einen Vierkant zur Furchmomentübertragung. Der Führungsteil hat auch die Funktion der Kalibrierung des herzustellenden Innengewindes. Der Formgebungsteil ist z.B. einer Oberflächenbehandlung zur Erzeugung einer verschleißfesten Gewindefurcher-Oberfläche unterzogen. Beim Gewindefurchen erfolgt ein stufenweises Kaltumformen des Werkstoffes verbunden mit einem Kalibrieren und Glätten der Gewindeflanken. Der Querschnitt des Gewindeganges am Werkzeug ist ein Polygon.

Bei einem bekannten (EP 0 004 089 A) Gewindefurcher der eingangs genannten Art ist im Anlaufbereich die äußere Drückfläche von im Querschnitt gesehen radial nach außen im wesentlichen spitzwinkeligen Gewindegängen gebildet, d.h. von äußeren schrägen Drückflanken gebildet, welche die inneren schrägen Drückflanken fortsetzen. Die Wirkungsrichtung der äußeren schrägen Drückflächen bildet mit einer Radialen und einer Axialen des Gewindefurchers einen Winkel. Die Zunahme der Wirkung der Gewindegänge im Anlaufbereich ist gegeben durch eine sog. Anstrehlung, d.h. eine Zunahme des Kerndurchmessers von der Spitze zum Führungsbereich bei gleichbleibender Höhe der Gewindegänge. Wird ein Werkstoff mit hexagonaler Gitterstruktur im Gefüge mit dem bekannten Gewindefurcher bearbeitet, weist das hergestellte Gewinde folgende negativen Eigenschaften auf: Der Mutterkerndurchmesser ist ungenügend ausgeformt. Im Bereich des Mutterkerndurchmessers lösen sich Werkstoffpartikel. Die Anwendung des bekannten Gewindefurchers für die Herstellung von Innengewinden an Werkstoffen mit geringer Gleitebenenanzahl und Kaltumformbarkeit muß zumindest bei hochbeanspruchten Schraubbefestigungen, wie sie unter anderem in der Automobilindustrie üblich sind, abgelehnt werden.

Eine Aufgabe der Erfindung ist es daher, einen Gewindefurcher der eingangs genannten Art zu schaffen, der bei der Herstellung von Innengewinde in Werkstoffe mit hexagonaler Gitterstruktur im Gefüge ein verbessertes Ausformen des Mutterkerndurchmessers ohne Lösen von Werkstoffpartikeln im Bereich des Mutterkerndurchmessers ergibt. Auch sollen Kerbwirkungen im Werkstoff vermieden werden. Der erfindungsgemäße Gewindefurcher ist, diese Aufgabe lösend, dadurch gekennzeichnet, daß im Anlaufbereich die äußeren Drückflächen gegenüber dem Spitzwinkeligen im wesentlichen radial wirkende verbreiterte Abflachungen sind und daß von den radial wirkenden Abflachungen gebildete, in Umfangserstreckung der Gewindegänge verlaufende Kanten abgerundet sind.

Der erfindungsgemäße Gewindefurcher stellt in Werkstoffen mit hexagonaler Gitterstruktur im Gefüge Innengewinde her, bei denen der Mutterkerndurchmesser gut ausgeformt ist und das Lösen von Werkstoffpartikeln im Bereich des Mutterkerndurchmessers vermieden ist. Es wird durch das Eindringen der breiten bzw. großen Abflachungs-Drückflächen bzw. Wirkflächen in den Werkstoff Reibung erzeugt. Die dadurch entstehende Wärme und der Druck selbst verbessern das Formänderungsvermögen des Werkstoffes und bewirken eine Materialverdrängung (Gleiten) entlang den werkstoffspezifischen Gitterebenen. Eine Zerstörung der Werkstoffgefügestruktur, z. B. durch Kerbwirkungen, ist beim Arbeiten mit dem erfindungsgemäßen Gewindefurcher nicht feststellbar. Der Gewindefurcher ist besonders für Werkstoffe geeignet, die infolge ihrer hexagonalen Gitterstruktur über eine geringe Anzahl von Gleitebenen und/oder bei Raumtemperatur über eine geringe Kaltumformbarkeit verfügen. Durch diese Abrundungen sind scharfe Kanten vermieden und ist die mit dem erfindungsgemäßen Gewindefurcher angestrebte Wirkung ermöglicht. Der Radius der Abrundung ist z. B. 0,1 mm.

Die beim erfindungsgemäßen Gewindefurcher vorgesehenen verbreiterten Abflachungen sind zu unterscheiden von Spitzenverrundungen, die bei Gewindefurchern, bisher auch im Anlaufbereich an Gewindegängen vorgesehen sind, um eine scharfe Spitze am radial freien Ende der Gewindegänge zu vermeiden. Die verbreiterten Abflachungen sind merklich breiter als eventuell am Führungsbereich vorhandene Spitzenverrundungen. Die verbreiterten Abflachungen sind nämlich merklich breite plane bzw. ebene Gebilde, deren Breite in der Regel mindestens P/10 beträgt. Die verbreiterten Abflachungen sind derart, daß sie beim Gewindefurchen im Werkstoff derartige Druckspannungen erzeugen, daß bei einer zur Bildung von Gleitebenen geeigneten Gefüge-Gitterstruktur zwei oder mehr Gleitebenen gebildet werden, d.h. daß das Furchen primär durch Druck erfolgt, wobei die Temperatur des Werkstoffes unter 250°C, sogar unter 200°C bleibt.

Es liegt eine besonders zweckmäßige und vorteilhafte Ausführungsform der Erfindung vor, wenn die verbreiterten Abflachungen von Gewindegang zu Gewindegang gleich breit sind. Diese Ausführungsform wird z.B. angewendet, wenn der Anlaufbereich mit einer Anstrehlung versehen ist. Wichtig sind die verbreiterten Drückflächen-Abflachungen, welche Reibung und damit Werkstoff-erwärmung bewirken.

Besonders zweckmäßig und vorteilhaft ist es auch, wenn die radial wirkenden Abflachungen in axialer Richtung entlang den Gewindegängen zum Führungsbereich hin auf ein Minimum abnehmen. Diese zweitgenannte Ausführungsform wird in der Regel angewendet, wenn der Kern bis zum Vorderende gleichbleibenden Durchmesser aufweist. Es führen die Abflachungen zu einer Zunahme der radialen Abmessung der Gewindegänge in Richtung von dem Vorderende zu dem Führungsbereich.

Bei dem erfindungsgemäßen Gewindefurcher nehmen die Radien der Drückflächen-Abflachungen in Richtung von dem Vorderende zu dem Führungsbereich von Gewindegang zu Gewindegang zu, wodurch die Wirkung der Anlaufbereich-Gewindegänge zunimmt. Die in axialer Richtung gesehene Breite der Drückflächen-Abflachungen nimmt bei der zweitgenannten Ausführungsform in Richtung vom Vorderende zu dem Führungsbereich vom Gewindegang zu Gewindegang ab. Das Minimum der Abflachung ist erreicht, wenn die Gewindegänge im Führungsbereich das Minimum des konstruktiv errechneten Werkzeugaußendurchmessers erreichen. Das Minimum der Abnahme kann jedoch auch einer sehr schmalen Verrundung der Gewindegänge des Führungsbereichs entsprechen, wenn diese Gewindegänge radial außen verrundet sind. Die Abflachungen sind allgemein in der Regel an maximal drei Gewindegängen vorgesehen.

Besonders zweckmäßig und vorteilhaft ist es auch, wenn die Abnahme der Abflachungen von Gewindegang zu Gewindegang stetig ist. Diese Abflachungen bewirken beim Gewindefurchen eine günstigere Verformung des Materials und haben in Achsrichtung gesehen eine zur Gewindefurcher-Mittelachse schräg geneigte Anordnung.

Besonders zweckmäßig und vorteilhaft ist auch die Anwendung des erfindungsgemäßen Gewindefurchers zur Herstellung von Innengewinde in einem Werkstoff mit einer hexagonalen Gefüge-Gitterstruktur, die eine oder mehr, z.B. zwei Gleitebenen bildet.

Hierdurch sind die für den erfindungsgemäßen Gewindefurcher besonders geeigneten Werkstoffe gegeben. Als Werkstoffe mit nur einer Gleitebene sind Mg, Zn und Be zu nennen. Siehe hierzu "Werkstoffkunde und Werkstoffprüfung", 10. Auflage Wolfgang Weißbach, Friedr. Vieweg & Sohn, Abschnitt 2.2, S. 31.

Besonders zweckmäßig und vorteilhaft ist dabei die Anwendung des erfindungsgemäßen Gewindefurchers zur Herstellung von Innengewinde in einem Werkstoff mit einer hexagonalen Gefüge-Gitterstruktur, dessen Spanmaterial durch eine bei spanender Bearbeitung auftretende Erhitzung ab 500°C entzündbar ist. Dieser entzündbare Werkstoff ist in der Praxis primär Magnesium oder eine Magnesiumlegierung. Der erfindungsgemäße Gewindefurcher macht die Herstellung genauer Innengewinde in Magnesium und Magnesiumlegierung praktisch brauchbar möglich.

Die Erfindung wird in der Praxis in Verbindung mit dem Werkstoff Stahl nicht verwendet, sondern primär in Verbindung mit den Werkstoffen verwendet, welche die Gefüge-Gitterstruktur-Gleitebenen besitzen und deren Spanmaterial sich bei spanender Bearbeitung entzünden würden. In der Regel ist das Formgebungsteil, insbesondere der Anlaufbereich mit einer verschleißfesten Oberflächenschicht versehen, die zumindest die verbreiterten Abflachungen und deren abgerundeten Kanten bedeckt. Es wird ein Verfahren zur Herstellung von Gewinde im Werkstoff Magnesium mittels Furchen vorgesehen, bei dem der Werkstoff nicht direkt oder indirekt erhitzt wird, sondern allein unter Druck gefurcht wird.
In der Zeichnung sind bevorzugte Ausführungsformen der Erfindung dargestellt und zeigt
- Fig. 1: eine perspektivische Darstellung eines ersten Gewindefurchers,
- Fig. 2: den Anlaufbereich des Gewindefurchers gemäß Fig. 1, in einem gegenüber Fig. 1 vergrößerten Maßstab,
- Fig. 3: eine perspektivische Darstellung eines zweiten Gewindefurchers,
- Fig. 4: den Anlaufbereich des Gewindefurchers gemäß Fig. 3, in einem gegenüber Fig. 3 vergrößerten Maßstab,
- Fig. 5: eine perspektivische Darstellung eines dritten Gewindefurchers,
- Fig. 6: den Anlaufbereich des Gewindefurchers gemäß Fig. 5 in einem gegenüber Fig. 5 vergrößerten Maßstab,
- Fig. 7: und 8, Fig. 9 und 10 sowie Fig. 11 und 12 jeweils eine Seitenansicht und eine Vorderansicht des ersten, zweiten und dritten Gewindefurchers,
- Fig. 13: und 14, Fig. 15 und 16 sowie Fig. 17 und 18 jeweils eine Seitenansicht und eine Vorderansicht eines vierten, fünften und sechsten Gewindefurchers,
- Fig. 19: im Schnitt den Anlaufbereich des Gewindefurchers gemäß Fig. 2, in einem gegenüber Fig. 2 vergrößerten Maßstab, und
- Fig. 20: im Schnitt den Anlaufbereich des Gewindefurchers gemäß Fig. 4, in einem gegenüber Fig. 4 vergrößerten Maßstab.

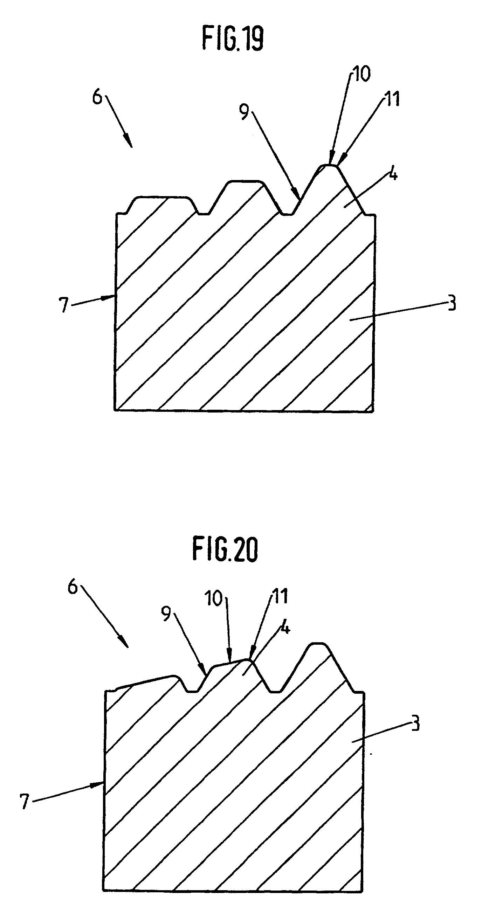

Die Gewindefurcher gemäß Zeichnung weisen jeweils einen Schaftteil 1 und einen Formgebungsteil 2 auf. Der Formgebungsteil 2 umfaßt einen Kern 3, an dem Gewindegänge 4 vorgesehen sind, und ist in einen Führungsbereich 5 und einen vorneliegenden Anlaufbereich 6 gegliedert, der in einem Vorderende 7 frei ausläuft. Die Gewindegänge 4 im Führungsbereich 5 sind im Querschnitt gesehen im wesentlichen spitzwinkelig, wobei der außenliegende Grat 8 z.B. abgerundet ist. Im Anlaufbereich 6 bilden die Gewindegänge 4 nahe dem Kern 3 innere schräge Drückflanken 9 und radial nach außen weisende verbreiterte Drückflächen-Abflachungen 10. Jede dieser Abflachungen 10 ist von zwei umlaufenden Kanten 11 begrenzt, die gemäß Fig. 19 und 20 abgerundet sind.

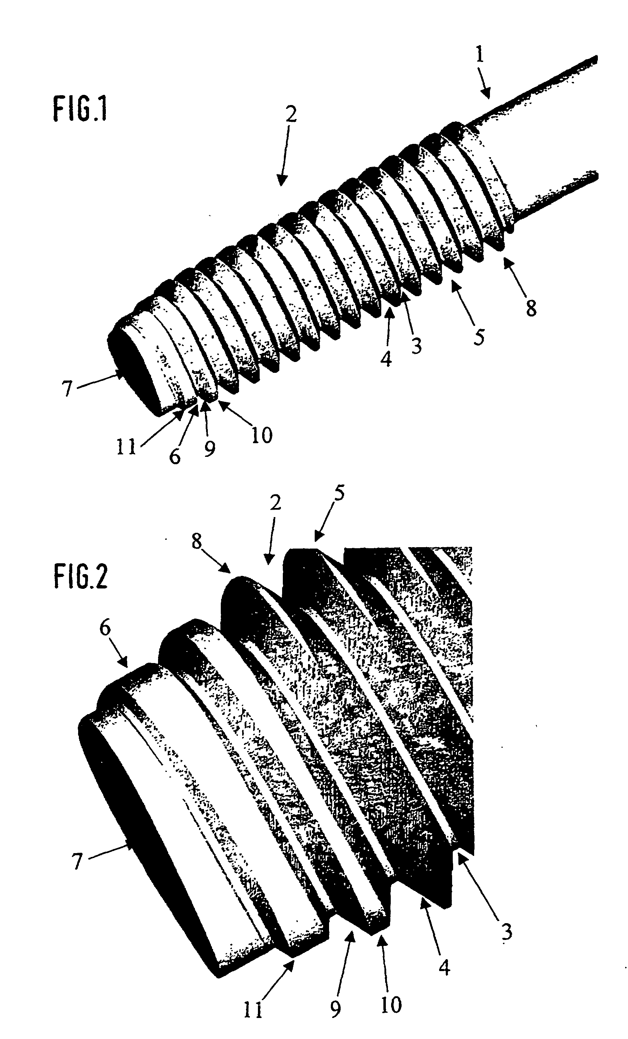

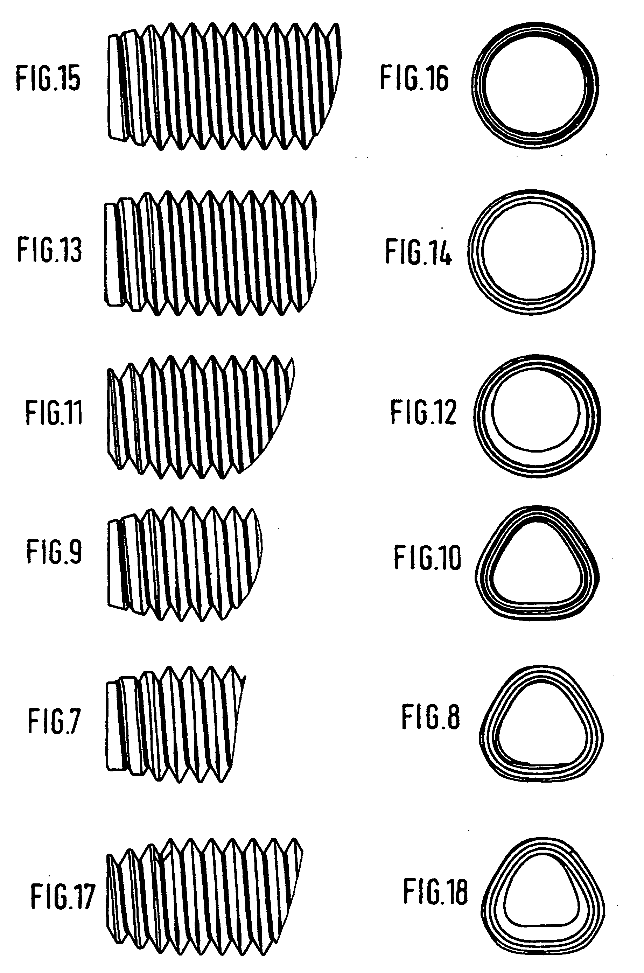

Bei dem Gewindefurcher gemäß Fig. 1 und 2 sowie Fig. 7 und 8 ist der Querschnitt des Formgebungsteils ein Polygon (Profilhinterschliff) und ist eine gestufte Zunahme der Abflachungen vorgesehen, wie es auch in Fig. 19 angegeben ist; der Kern weist zum Vorderende hin gleichbleibenden Querschnitt auf.

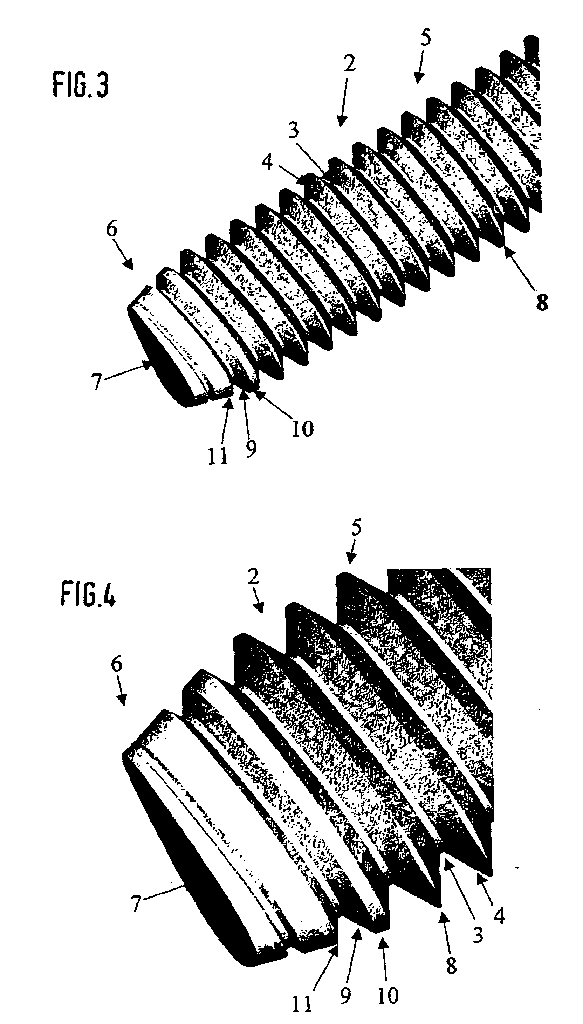

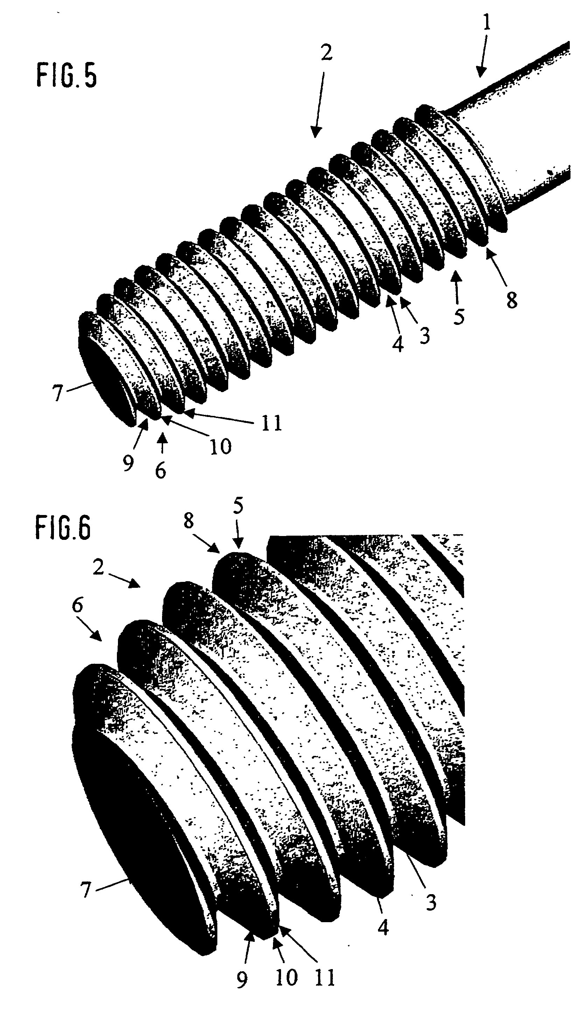

Bei dem Gewindefurcher gemäß Fig. 3 und 4 sowie Fig. 9 und 10 ist der Querschnitt des Formgebungsteils ein Polygon (Profilhinterschliff) und ist eine kegelige bzw. stetige Zunahme der Abflachungen vorgesehen, wie es auch in Fig. 20 angegeben ist; der Kern weist zum Vorderende hin gleichbleibenden Querschnitt auf. Bei dem Gewindefurcher gemäß Fig. 5 und 6 sowie Fig. 11 und 12 ist der Querschnitt des Formgebungsteils kreisrund und ist eine gleich breite Gestaltung der Abflachungen vorgesehen; der Kern weist zum Vorderende hin abnehmenden, gestrehlten Querschnitt auf.

Bei dem Gewindefurcher gemäß Fig. 13 und 14 ist der Querschnitt des Formgebungsteils kreisrund und ist eine gestufte Zunahme der Abflachungen vorgesehen, wie es auch in Fig. 19 angegeben ist; der Kern weist zum Vorderende hin gleichbleibenden Querschnitt auf. Bei dem Gewindefurcher gemäß Fig. 15 und 16 ist der Querschnitt des Formgebungsteils kreisrund und ist eine kegelige bzw. stetige Zunahme der Abflachungen vorgesehen, wie es auch in Fig. 20 angegeben ist; der Kern weist zum Vorderende hin gleichbleibenden Querschnitt auf. Bei dem Gewindefurcher gemäß Fig. 17 und 18 ist der Querschnitt des Formgebungsteils ein Polygon und ist eine gleich breite Gestaltung der Abflachungen vorgesehen; der Kern weist zum Vorderende hin abnehmenden, gestrehlten Querschnitt auf.

## Patentansprüche

1. Gewindefurcher,
der einen Schaftteil (1) und einen Formgebungsteil (2) bildet,
bei dem der Formgebungsteil an einem Kern (3) Gewindegänge (4) bildet und in einen Anlaufbereich (6) und einen Führungsbereich (5) gegliedert ist,
bei dem im Anlaufbereich die Gewindegänge nahe dem Kern innere schräge Drückflanken (9) bilden und an diese radial nach außen anschließend äußere Drückflächen (10) bilden,
bei dem im Führungsbereich die Gewindegänge im Querschnitt gesehen radial nach außen im wesentlichen spitzwinkelig sind,
bei dem der Anlaufbereich in der Wirkung der Gewindegänge von einem Vorderende (7) zu dem Führungsbereich zunimmt,
**dadurch gekennzeichnet,**
**daß** im Anlaufbereich (6) die äußeren Drückflächen gegenüber dem Spitzwinkeligen im wesentlichen radial wirkende verbreiterte Abflachungen (10) sind, und
**daß** von den radial wirkenden Abflachungen (10) gebildete, in Umfangerstreckung der Gewindegänge (4) verlaufende Kanten (11) abgerundet sind.

2. Gewindefurcher nach Anspruch 1, **dadurch gekennzeichnet, daß** die verbreiterten Abflachungen (10) von Gewindegang (4) zu Gewindegang gleich breit sind.

3. Gewindefurcher nach Anspruch 1, **dadurch gekennzeichnet, daß** die radial wirkenden Abflachungen (10) in axialer Richtung entlang den Gewindegängen (4) zum Führungsbereich (5) hin auf ein Minimum abnehmen.

4. Gewindefurcher nach einem der Ansprüche 1 bis 3, **dadurch gekennzeichnet, daß** die verbreiterten Abflachungen (10) bei jedem Gewindegang breiter als ca. 1/10 x P sind.

5. Gewindefurcher nach Anspruch 3 oder 4, **dadurch gekennzeichnet, daß** die Abnahme der Abflachungen (10) von Gewindegang (4) zu Gewindegang stetig ist.

6. Anwendung des Gewindefurchers nach einem der Ansprüche 1 bis 5 zur Herstellung von Innengewinde in einem Werkstoff mit einer hexagonalen Gefüge-Gitterstruktur, die unter Temperatur eine oder mehr Gleitebenen bildet.

7. Anwendung des Gewindefurchers nach einem der Ansprüche 1 bis 5 zur Herstellung von Innengewinde in einem Werkstoff mit einer hexagonalen Gefüge-Gitterstruktur, dessen Spanmaterial durch eine bei spanender Bearbeitung auftretende Erhitzung ab 500° C entzündbar ist.

## Claims

1. A thread forming tap,
which comprises a shank part (1) and a forming part (2),
in which the forming part comprises thread turns (4) on a core (3) and includes an entry region (6) and a guide region (5),
in which the thread turns in the entry region form inner oblique pressure flanks (9) near to the core and outer pressure faces (10) which adjoin said pressure flanks radially outwardly,
in which the thread turns in the guide region form substantially acute angles radially outwardly, as seen in cross section,
in which the effect of the thread turns in the entry region increases from a front end (7) to the guide region,
**characterised in that**,
in the entry region (6), the outer pressure faces are substantially radially acting widened flattened portions with respect to the acutely angled portions, and
**in that** edges (11), which are formed by the radially acting flattened portions (10) and extend in the circumferential direction of the thread turns (4), are rounded.

2. A thread forming tap according to Claim 1, **characterised in that** the widened flattened portions (10) have the same width from thread turn (4) to thread turn.

3. A thread forming tap according to Claim 1, **characterised in that** the radially acting flattened portions (10) decrease to a minimum in the axial direction along the thread turns (4) to the guide region (5).

4. A thread forming tap according to one of Claims 1 to 3, **characterised in that** the widened flattened portions (10) for each thread turn are wider than ca. 1/10 x P.

5. A thread forming tap according to Claim 3 or 4, **characterised in that** the decrease in the flattened portions (10) is constant from thread turn (4) to thread turn.

6. A use of the thread forming tap according to one of Claims 1 to 5 for producing an internal thread in a material having a hexagonal lattice structure, which forms one or more slip planes under temperature.

7. A use of the thread forming tap according to one of Claims 1 to 5 for producing an internal thread in a material having a hexagonal lattice structure, whereof the chip material is ignitable when heated to 500° C and above during machining.

## Revendications

1. Outil de filetage,
qui forme une partie de tige (1) et une partie de façonnage (2), sur lequel la partie de façonnage forme des pas de filet (4) sur un noyau (3) et est subdivisée en une zone de démarrage (6) et une zone de guidage (5),
sur lequel, dans la zone de démarrage, les pas de filet forment des flancs de pression (9) inclinés intérieurs à proximité du noyau et forment des surfaces de pression (10) extérieures se raccordant radialement vers l'extérieur à ces flancs,
sur lequel, dans la zone de guidage, les pas de filet forment un angle sensiblement aigu vus en section radialement vers l'extérieur,
sur lequel la zone de démarrage augmente au niveau de l'effet des pas de filet depuis une extrémité avant (7) vers la zone de guidage,
**caractérisé en ce que** ce,
dans la zone de démarrage (6), les surfaces de pression extérieures sont des parties aplaties (10) élargies et avec un effet sensiblement radial par rapport à l'angle aigu, et **en ce que**
des arêtes (11) formées par les parties aplaties (10) à effet radial et agencées dans l'étirement périphérique des pas de filet (4) sont arrondies.

2. Outil de filetage selon la revendication 1, **caractérisé en ce que** les parties aplaties (10) élargies ont une largeur identique d'un pas de filet (4) à l'autre.

3. Outil de filetage selon la revendication 1, **caractérisé en ce que** les parties aplaties (10) à effet radial décroissent jusqu'à un minimum dans le sens axial le long des pas de filet (4) en direction de la zone de guidage (5).

4. Outil de filetage selon l'une quelconque des revendications 1 à 3, **caractérisé en ce que** les parties aplaties (10) élargies sont plus larges qu'environ 1/10 x P sur chaque pas de filet.

5. Outil de filetage selon la revendication 3 ou 4, **caractérisé en ce que** la réduction des parties aplaties (10) est constante d'un pas de filet (4) à l'autre.

6. Utilisation de l'outil de filetage selon l'une quelconque des revendications 1 à 5 pour la fabrication de filets intérieurs dans un matériau présentant une structure de grille de texture hexagonale, qui forme à la température un ou plusieurs plan(s) de glissement.

7. Utilisation de l'outil de filetage selon l'une quelconque des revendications 1 à 5 pour la fabrication de filets intérieurs dans un matériau présentant une structure de grille de texture hexagonale, dont le matériau de copeau peut être enflammé par un réchauffement à partir de 500°C qui apparaît lors d'un usinage par enlèvement de copeaux.
